# EUROPÄISCHE PATENTANMELDUNG

(11) **EP 1 514 889 A2**
(43) Veröffentlichungstag der Anmeldung: **16.03.2005**
(21) Anmeldenummer: 04018984.7
(22) Anmeldetag: 10.08.2004
(51) Int. Cl.: C08G 75/04, C08L 81/02

(54) **Härtbare zweikomponentige flüssige Polymerzusammensetzungen**

(30) Priorität: 19.08.2003 DE 10338069
(71) Anmelder: Henkel Kommanditgesellschaft auf Aktien, 40589 Düsseldorf-Holthausen (DE)
(72) Erfinder: Grimm, Stefan, 68723 Schwetzingen (DE)

(57) **Zusammenfassung**

Thiol-/En-Zusammensetzungen bei denen mindestens eine Komponente ein bei Raumtemperatur flüssiges Polymer mit mindestens zwei nicht konjugierten olefinischen Doppelbindungen pro Molekül aufweist und mindestens eine Härterkomponente auf der Basis von organischen Verbindungen mit mindestens zwei Mercaptogruppen pro Molekül lassen sich durch metallorganische Verbindungen in ihrer Reaktion beschleunigen. Die Topfzeit läßt sich in weiten Grenzen durch Einsatz von Reaktionsverzögerern den Anwendungsbedingungen anpassen.

## Beschreibung

Die Erfindung betrifft zwei- oder mehrkomponentige flüssige, härtbare Bindemittel-Zusammensetzungen auf der Basis von Thiol-funktioneller Polymerer in Kombination mit Polymeren, die olefinische Doppelbindungen enthalten. Die Erfindung betrifft weiterhin die Verwendung dieser Zusammensetzungen als Kleb-/Dichtstoff und dessen Verwendung.

In der metallverarbeitenden Industrie, der Fahrzeugindustrie, im Nutzfahrzeugbau sowie in deren Zulieferindustrie, bei der Autoreparatur oder in der Bauindustrie sowie bei der Herstellung von Isoliergläsern werden vielfach gleiche oder verschiedenartige metallische und nichtmetallische Substrate klebend bzw. abdichtend miteinander verbunden. Hierfür stehen bereits eine Vielzahl von einkomponentigen bzw. zwei-komponentigen Kleb-/Dichtstoffen zur Verfügung. Einkomponentige Kleb-/Dichtstoffe werden in der Regel von den Anderen bevorzugt, da hierbei keine Misch- und Dosierfehler bei der Anwendung auftreten können. Die Mehrzahl dieser einkomponentigen Kleb-/Dichtstoffe beruhen dabei auf feuchtigkeitshärtenden Systemen, die mit der Feuchtigkeit der umgebenden Luft aushärten. Bei wechselnden klimatischen Bedingungen und insbesondere bei der Verklebung von nicht porösen Substraten ist die Verwendung von einkomponentig feuchtigkeitshärtenden Kleb-/Dichtstoffen jedoch wegen der sehr langsamen Durchhärtungsgeschwindigkeit stark eingeschränkt. Aus diesem Grunde gibt es nach wie vor einen erheblichen Bedarf an zwei- oder mehrkomponentigen Kleb-/Dichtstoffen, deren reaktiven Komponenten erst unmittelbar vor der Anwendung gemischt werden, womit der Aushärtungsprozess gestartet wird.

Chemisch härtende zweikomponentige Zusammensetzungen und deren Verwendung als Kleb-/Dichtstoffe sind seit langem bekannt, im allgemeinen besteht die erste Komponente derartiger Zusammensetzungen aus einem Präpolymer mit reaktiven Gruppen und sowie Zusätzen bzw. Zuschlagstoffen, während die zweite Komponente aus einem Härter mit reaktiven Gruppen besteht, die mit dem reaktiven Gruppen der ersten Komponente unter Aushärtung reagieren können. Bekannt sind derartige Systeme auf der Basis von reaktiven Silangruppen, auf der Basis von Epoxiden, auf der Basis von Mercaptanen und/oder Polysulfidgruppierungen sowie solche auf der Basis von reaktiven Isocyanatgruppen. Härtbare Zusammensetzungen auf der Basis von Thiolgruppen- (Mercaptogruppen-) haltigen Verbindungen mit olefinische Doppelbindungen enthaltenden Verbindungen sind bekannt.

So beschreibt US 3,661,744 photohärtbare flüssige Polymerzusammensetzungen auf der Basis einer flüssigen Polyenkomponente die pro Molekül mindestens zwei ungesättigte Kohlenstoff-Doppelbindungen an terminalen Positionen der Hauptkette des Moleküls aufweist in Kombination mit einer Polythiolkomponente enthaltend eine Mehrzahl von terminalen oder statistisch verteilten SH-funktionellen Gruppen pro Molekül. Weiterhin weisen diese Zusammensetzungen einen Photoinitiator bzw. Beschleuniger auf. Die photohärtbaren Zusammensetzungen können dann mit Hilfe von aktinischen Licht zu festen, elastomeren, harzartigen Produkten gehärtet werden, welche als Dichtstoffe, Beschichtungsmaterialien, Klebstoffe oder Giesskörper eingesetzt werden können.

In ähnlicher Weise beschreibt US 3,898,349 ähnliche Zusammensetzungen auf der Basis von flüssigen Polyenen enthaltend mindestens zwei terminale reaktive Doppelbindungen pro Molekül und Polythiol-Verbindungen mit mindestens zwei Thiolgruppen pro Molekül. Die Zusammensetzungen enthalten einen radikalischen Initiator, der bei elektromagnetischer Bestrahlung mit einer Wellenlänge zwischen 2000 und 7000 Å oder hochenergetischer ionisierender Strahlung freie Radikale generiert.

US 4,008,341 beschreibt ebenfalls härtbare Zusammensetzungen auf der Basis von flüssigen ungesättigten Verbindungen mit mindestens zwei Vinyladditionspolymersierbaren Gruppen pro Molekül und einem Polythiol mit einer Mehrzahl an SH-funktionellen Gruppen. Diese Zusammensetzungen sollen ebenfalls in Anwesenheit einer freie Radikale generierenden Verbindung unter UV-Bestrahlung aushärten.

In neuerer Zeit wurden Thiol-/En-Systeme auf der Basis von Norbornenyl-funktionellen flüssigen Polymeren und Polythiolen beschrieben, die wiederum mit freien radikalischen Initiatoren, ggf. unter Bestrahlung mit UV-Licht ausgehärtet werden sollen, beispielhaft erwähnt seien hier US 5,837,751, US 5,358,976, US 5,182,360, US 5,171,816, US 5,034,490 und US 5,028,661.

Daneben sind noch Dichtstoffe auf der Basis mercaptoendständiger, flüssiger Oligomerer mit Weichmachern, Füll- und Zusatzstoffen sowie als Härtungsmittel Acryl- oder Methacrylverbindungen mit mindestens zwei Acryl- oder Methacrylgruppen pro Molekül und aminischen Verbindungen als Härtungskatalysator bekannt worden, siehe hierzu DE 4311185.

DE 3710431 beschreibt härtbare Zusammensetzungen enthaltend als eine Komponente Verbindungen mit mindestens zwei aktivierten Doppelbindungen, wobei diese aktivierten Doppelbindungen α,β-ungesättigte Carbonylverbindungen, α,β-ungesättigte Carbonsäureester oder α,β-ungesättigte Nitrilgruppen sein sollen. Die zweite Komponente soll Verbindungen enthalten, die mindestens zwei aktive Wasserstoffatome oder mindestens zwei Gruppen mit aktiven Wasserstoffatomen oder mindestens ein aktives Wasserstoffatom und mindestens eine Gruppe mit einem aktiven Wasserstoffatom enthalten. Diese härtbaren Zusammensetzungen bilden bei Härtung Michael-Additionsprodukte. Als aktive Wasserstoffatome aufweisende Gruppen werden neben OH-, NH- oder COH- auch SH-Gruppen genannt.
Bei Raumtemperatur aushärtbare zweikomponentige Kleb-/Dichtstoffsysteme sind in zwei Punkten verbesserungsbedürftig: unmittelbar nach dem Zusammenfügen der zu verbindenden Teile haben sie eine sehr geringe Anfangsfestigkeit, so daß die verbundenen Teile zunächst mechanisch fixiert werden müssen, bis die Klebefuge eine hinreichende Festigkeit hat. Außerdem haben zweikomponentige reaktive Systeme vom Zeitpunkt des Mischens der beiden Komponenten nur eine begrenzte Verarbeitungszeit, die sogenannte "Topfzeit", innerhalb derer nach Applikation der Klebstoff/Dichtstoffmischung die Komponenten gefügt sein müssen.

Unter Topfzeit wird der Zeitraum verstanden, der nach der vollständigen Vermischung eines Zwei- oder Mehrkomponentensystems zur sachgerechten Verarbeitung verbleibt, bevor die Viskosität der Mischung durch einsetzende Reaktion so hoch geworden ist, daß die Mischung nicht mehr sachgerecht verarbeitet werden kann.

Das letztgenannte Problem tritt insbesondere bei großflächiger Applikation sowie im handwerklichen Bereich besonders stark zu tage. Es besteht also Bedarf für zweikomponentige, bei Raumtemperatur härtbare Zusammensetzungen auf Basis flüssiger Polymerer, deren Härtungsgeschwindigkeit und Topfzeit leicht den entsprechenden Anwendungsbedingungen anpassbar sind. Weiterhin sollen diese Zusammensetzungen die folgenden zusätzlichen Randbedingungen erfüllen:
- die Lagerstabilität der Komponenten soll nicht durch die Anwesenheit von Feuchtigkeit aus anderen Bestandteilen wie z.B. Füllstoffen, Weichmachern usw. beeinflußt werden,
- geringe Empfindlichkeit gegen Feuchtigkeitszutritt zu Teilen der Verarbeitungsanlagen wie Leitungen, Applikationsdüsen und Absperrventilen,
- Abwesenheit von Zusammensetzungsbestandteilen, die in arbeitshygienischer Sicht schwierig zu handhaben sind (beispielsweise monomere, flüchtige Isocyanate oder niedermolekulare, Spuren von Epichlorhydrin enthaltende Epoxidverbindungen).

Die erfindungsgemäße Lösung dieser Aufgabe ist den Patentansprüchen zu entnehmen, sie beruht im wesentlichen in der Bereitstellung von zwei- oder mehrkomponentigen Zusammensetzungen enthaltend mindestens eine Komponente auf der Basis eines bei Raumtemperatur flüssigen Polymers mit mindestens zwei nicht konjugierten olefinischen Doppelbindungen pro Molekül als Bindemittel und mindestens eine Härterkomponente auf der Basis von organischen Verbindungen mit mindestens zwei Mercaptogruppen pro Molekül als Vernetzer, wobei mindestens eine der Komponenten eine metallorganische Verbindung als Reaktionsbeschleuniger enthält.

In einer weiteren, besonders bevorzugten Ausführungsform kann eine der Reaktionskomponenten einen Reaktionsverzögerer enthalten, wodurch sich die Härtungsgeschwindigkeit nachdem Mischen der Reaktivkomponenten steuern läßt (Steuerung der Topfzeit).

Obwohl die zweikomponentige Ausführungsform der erfindungsgemäßen Zusammensetzungen bevorzugt ist, kann es in Sonderfällen zweckmäßig sein, entweder den Reaktionsbeschleuniger oder den Reaktionsverzögerer in einer weiteren dritten und/oder vierten separat bereitgestellten Komponente aufzunehmen, die erst kurz vor oder während der Applikation beim Mischen der olefinischen Doppelbindungen enthaltenen Polymer-Komponente (En-Komponente) mit der mercaptogruppenhaltigen Härterkomponente (Thiol-Komponente) zu der Mischung hinzugefügt wird. Die Mischung der Reaktionskomponenten erfolgt dabei in bekannter Weise entweder durch statische oder dynamische Mischaggregate, oder im einfachsten Fall durch manuelles Rühren der Komponenten.

Das bei Raumtemperatur flüssige Polymer mit den nicht konjugierten Doppelbindungen (En-Polymer) kann dabei aus einer Vielzahl von Polymeren ausgewählt werden, beispielhaft erwähnt seien Allyl-terminierte Polyether oder Allyl-terminierte Polyurethane, Polybutadiene, insbesondere 1,4- und 1,2-Polybutadiene, Polybutene, Polyisobutylene, 1,4- und 3,4-Polyisoprene, Styrol-, Butadiencopolymere, Butadien-acrylnitril-Copolymere, Ethylen-Propylen-Dien-Kautschuke (EPDM) oder deren Mischungen. Dabei haben diese En-Polymeren ein Molekulargewicht unterhalb von 40000, vorzugsweise zwischen 900 und 1000. Grundsätzlich kann die En-Komponente auch noch niedermolekulare En-Verbindungen enthalten wie z.B. Trisallylisocyanurat, Divinylbenzol sowie die in US 5,171,816 A1 oder US 4,808,638 A1 offenbarten Norbornenyl-funktionellen Polyene oder ähnliche niedermolekulare Polyene enthalten.

Weiterhin können die vorgenannten Polybutadien- oder Polyisopren Homo- oder Copolymeren, zumindest anteilig, noch funktionellen Gruppen wie OH-Gruppen, NH-Gruppen oder Carboxylgruppen enthalten.

Das En-Polymer als Bindemittel wird dabei in den erfindungsgemäßen Zusammensetzungen in Mengen von 5 bis 50 Gew.-%, vorzugsweise zwischen 15 und 30 Gewichtsprozent eingesetzt. Dabei beziehen sich die Gewichtsprozentangaben auf die Gesamt-Zusammensetzung der bindemittelhaltigen Komponente, auch A-Komponente genannt.

Die in der zweiten Komponente einzusetzenden Polythiole können aus einer Vielzahl von Verbindungen ausgewählt werden prinzipiell geeignet sind solche Polythiole wie sie in der US 3,661,744, Spalte 8, Zeile 56 bis Spalte 9, Zeile 46 offenbart sind. Die dort offenbarten Polythiol-Verbindungen sind ausdrücklich Bestandteil dieser Anmeldung.

Weitere Beispiele sind Ester von Thiolcarbonsäure mit Polyolen, wie z.B. Ester der Thioessigsäure, der Thiopropionsäure oder der Thiopropencarbonsäure mit Polyolen wie Ethylenglykol, Triethylenglykol, deren höhern Homologen oder Polymeren oder Propylenglykol, Dipropylenglykol und entsprechenden Homologen oder Polymeren oder Trimethylolpropan, Glycerin oder ähnlichen trifunktionellen Polyolen. Weiterhin geeignet sind Alkandithiole oder Alkantrithiole wie z.B. Ethandithiol, Hexamethylendithiol, Decamethylendithiol, 2,4-Toluylendithiol oder polymere Polythiole wie thiolterminierte Ethylcyclohexyldimercaptan-polymere, Mercato-terminierte Polyurethane oder Mercapto-terminierte Polysulfide oder deren Mischungen.

Die thiolhaltige Vernetzer- bzw. Härterkomponente wird dabei für ein zweikomponentiges System üblicherweise separat hergestellt und gelagert, sie wird auch B-Komponente genannt, dabei enthält die Komponente B in der Regel 20 bis 60 Gew.-% Thiol-Verbindung vorzugsweise 40 bis 60 Gew.-%, jeweils bezogen auf die Gesamtzusammensetzung der B-Komponente.

Die erfindungsgemäße einzusetzenden Reaktionsbeschleuniger werden ausgewählt aus Alkoxylaten oder Carboxylaten von ein-, zwei-, drei oder vierwertigen Metallen, Alkylmetallverbindungen oder organischen Chelatverbindungen von zwei-, drei oder vierwertigen Metallen.

Als Reaktionsbeschleuniger geeignet sind Alkoxylate oder Alkalisalze von aliphatischen, aromatischen Carbonsäuren synthetischen oder natürlichen Ursprungs, wobei jeweils alkyl- und/oder arylsubstituierte Verbindungen sowie deren Mischungen eingeschlossen sind. Besonders bevorzugt sind diejenigen Salze, die mit der Polymermatrix verträglich sind und homogen eingearbeitet werden können, was insbesondere bei aliphatischen Carbonsäureresten einer Kettenlänge von C₃ bis C₂₂ der Fall ist.
Als erfindungsgemäß einsetzbare Reaktionsbeschleuniger (Katalysatoren) eignen sich insbesondere die metallorganischen Verbindungen der zwei- bis fünfwertigen Metalle wie Blei, Aluminium, Zinn, Eisen, Titan, Wismut oder Zirkonium, insbesondere deren Alkoxylate oder Carboxylate. Beispielhaft erwähnt seien Zinn(II)salze von Carbonsäuren, z.B. Zinn-II-acetat, -ethylhexoat und -diethylhexoat. Eine weitere Verbindungsklasse stellen die Dialkyl-Zinn(IV)-Carboxylate dar. Die Carbonsäuren haben 2, vorzugsweise wenigstens 10, insbesondere 14 bis 32 C-Atome. Es können auch Dicarbonsäuren eingesetzt werden. Als Säuren seien ausdrücklich genannt: Adipinsäure, Maleinsäure, Fumarsäure, Malonsäure, Bernsteinsäure, Pimelinsäure, Terephthalsäure, Phenylessigsäure, Benzoesäure, Essigsäure, Propionsäure sowie 2-Ethylhexan-, Capryl-, Caprin-, Laurin-, Myristin-, Palmitin- und Stearinsäure. Konkrete Verbindungen sind Dibutyl- und Dioctyl-zinndiacetat, -maleat, -bis-(2-ethylhexoat), -dilaurat, Tributylzinnacetat, Bis(β-methoxycarbonyl-ethyl)zinndilaurat und Bis(βacetyl-ethyl)zinndilaurat. Außerdem sind die Chelate aus β-Dicarbonylverbindungen und den zwei- bis fünfwertigen Metallen als Reaktionsbeschleuniger geeignet. Beispiele für derartige β-Dicarbonylverbindungen sind Acetylessigsäure, Acetylaceton oder Malonsäurederivate.

Auch Zinnoxide und -sulfide sowie -thiolate sind brauchbar. Konkrete Verbindungen sind: Bis(tributylzinn)oxid, Bis(trioctylzinn)oxid, Dibutyl- und Dioctylzinn-bis(2-ethyl-hexylthiolat) Dibutyl- und Dioctylzinndidodecylthiolat, Bis(ßmethoxycarbonyl-ethyl)zinndidodecylthiolat, Bis(β-acetyl-ethyl)zinn-bis(2-ethylhexylthiolat), Dibutyl- und Dioctylzinndidodecylthiolat, Butyl- und Octylzinntris(thioglykolsäure-2-ethylhexoat), Dibutyl- und Dioctylzinn-bis(thioglykolsäure-2-ethylhexoat), Tributyl- und Trioctylzinn(thioglykolsäure-2-ethylhexoat) sowie Butylund Octylzinntris(thioethylenglykol-2-ethylhexoat), Dibutyl- und Dioctylzinnbis(thioethylenglykol-2-ethylhexoat), Tributyl- und Trioctylzinn(thioethylenglykol-2-ethylhexoat) mit der allgemeinen Formel Rₙ₊₁Sn(SCH₂CH₂OCOC₈H₁₇)₃₋ₙ, wobei R eine Alkylgruppe mit 4 bis 8 C-Atomen ist, Bis(β-methoxycarbonyl-ethyl)zinnbis(thioethylenglykol-2-ethylhexoat), Bis(β-methoxycarbonyl-ethyl)-zinnbis(thioglykolsäure-2-ethylhexoat), und Bis(β-acetyl-ethyl)zinn-bis(thioethylenglykol-2-ethylhexoat) und Bis(β-acetyl-ethyl)zinn-bis(thioglykolsäure-2-ethylhexoat.

Die vorgenannten Reaktionsbeschleuniger werden üblicherweise bei zweikomponentigen Systemen in die A-Komponente (die Bindemittelkomponente) eingemischt. Ihre Mengen richten sich nach der gewünschten Härtungsgeschwindigkeit, sie liegen zwischen 0,1 und 1,0 Gew.-% vorzugsweise zwischen 0,02 und 0,5 Gew.-%.

Als Reaktionsverzögerer können Verbindungen eingesetzt werden, die allgemein als Antioxidantien bezeichnet werden, hierzu gehören z.B. Verbindungen aus den Klassen der sterisch gehinderten Phenole, Benzotriazole, Chinoline, Thioether, Thioester oder deren Mischungen. Konkrete Beispiele für sterisch gehinderte Phenole sind 2,6-Di-tert-buthylphenol, Tetrakis[methylen(3,5-di-tert-butyl-4-hydroxyhydrocinnamyl)]methan, 2,2'-methylenebis-(4-methyl-6-tert-butylphenol), 2,6-di-tert-butyl-4-methylphenol, N,N'-1,6-hexamethylene-bis3-(3,5-di-tert-butyl-4-hydroxyphenyl)-propionamid, 4,4'-Butylidenebis(6-tert-butyl-3-methylphenol), 4,4'-Thiobis(2-tert-butyl-5-methylphenol) und ähnliche Verbindungen. Konkrete Beispiele für Thioester als Reaktionsverzögerer sind Dilaurylthiodipropylat, Distearylthiodipropionat. Weiterhin sind die folgenden organischen Schwefelverbindungen geeignet: Metallsalze von Dialkyldithiocarbonsäuren oder Dilauryl, Dimyristyl- bzw. Distearyl-ester von Thiodipropionsäure oder auch Dialkyldithiophospate. Beispiele für geeignete Benzotriazole sind die unter den Handelsnamen Tinuvin P, Tinuvin 320, Tinuvin 328, Tinuvin 350, Tinuvin 234, Tinuvin 326 oder Tinuvin 327 bekannten substituierten Benzotriazole der Firma Ciba Geigy. Als Vertreter der Chinoline sei beispielhaft das 2,4-Trimethyl-1,2-Dihydrochinolin erwähnt. Gegebenenfalls können diese Reaktionsverzögerer auch in Mischungen eingesetzt werden.

Die Reaktionsbeschleuniger werden üblicherweise in Konzentrationen zwischen 0,01 und 1,0 Gew.-%, besonders bevorzugt zwischen 0,02 und 0,5 Gew.-% eingesetzt, die Reaktionsverzögerer in Konzentrationen zwischen 0,01 und 3 Gew.-%, vorzugsweise zwischen 0,01 und 1 Gew.-%, ganz besonders bevorzugt zwischen 0,02 und 0,5 Gew.-%. In einer besonders bevorzugten Ausführungsform werden die Reaktionsbeschleuniger in die Komponente eingearbeitet, die ein oder mehrerer En-Polymere enthält und der Reaktionsverzögerer wird in die Thiol-haltige Komponente eingearbeitet.

Neben den vorgenannten wesentlichen Bestandteilen können sowohl die En-Komponente als auch die Thiol-Komponente weitere Hilfs- und Zusatzmittel enthalten wie Füllstoffe, Pigmente oder Farbstoffe, Weichmacher, Rheologiehilfsmittel, Trockenmittel, Haftvermittler oder deren Mischungen.

Bevorzugte Weichmacher sind Alkylphthalate wie Dibutylphthalat, Dioctylphthalat, Benzylbutylphthalat, Dibenzylphthalat, Diisononylphthalat (DINP), Diisodecylphthalat (DIDP) sowie Diundecylphthalat (DIUP), geeignet sind jedoch auch die bekannten Weichmacher aus der Gruppe der organischen Phosphate, Adipate und Sebazate oder auch Benzylbenzoat, flüssige Polybutene, Dibenzoate von Dioder Oligopropylenglycolen, Alkylsulfonsäureester des Phenols bzw. Kresols, Dibenzyltoluol oder Di-phenylether. Die Auswahlkriterien für die bevorzugt verwendeten Weichmacher richten sich zum einen nach der Polymerzusammensetzung sowie zum anderen nach Viskosität, sowie den gewünschten rheologischen Eigenschaften der Zusammensetzung. Bei zweikomponentigen Systemen kann sowohl die A-Komponente als auch die B-Komponente weichmacherhaltig sein. Die A-Komponente enthält dabei üblicherweise zwischen 5 und 20 Gew.-%, vorzugsweise 8 und 14 Gew.-% Weichmacher, die B-Komponente enthält zwischen 5 und 25 Gew.-% Weichmacher, vorzugsweise zwischen 6 und 16 Gew.-%.

Zusätzlich können Thixotropiermittel wie z.B. pyrogene Kieselsäuren, Bentone, Harnstoffderivate, fibrillierte oder Pulp-Kurzfasern sowie Farbpasten bzw. Pigmente in den Zusammensetzungen enthalten sein.

Außerdem kann mindestens eine Komponente der erfindungsgemäßen Zusammensetzungen Haftvermittler enthalten, vorzugsweise auf der Basis organofunktioneller Silane, beispielhaft erwähnt seien hier die Aminoalkylalkoxysilane, 3-Glycidyl-oxipropyl-trialkoxysilan, 3-Mercaptopropyltrialkoxysilan, 3-Aminopropyltrialkoxysilan, N-Aminoethyl-3-Aminopropyl-Methyldialkoxysilan, Phenylaminopropyltrialkoxysilan, Aminoalkyltrialkoxydisilan oder i-Butylmethoxysilan oder auch Vinyltrialkoxysilan. Dabei sind die Alkoxygruppen in der Regel C1 bis C4-Alkoxygruppen. Weiterhin eignen sich als Haftvermittler beispielsweise Kohlenwasserstoffharze, Phenolharze, Terpen-Phenolharze, Resorcinharze oder deren Derivate, modifizierte oder unmodifizierte Harzsäuren bzw. -ester (Abietinsäurederivate), Polyamine, Polyamino-amide, Anhydride und Anhydrid-enthaltende Copolymere. Die Haftvermittler werden üblicherweise in 0,2 bis 2 Gew.-% vorzugsweise zwischen 0,4 und 0,8 Gew.-% in die A-Komponente eingebracht. Auch der Zusatz von Polyepoxidharzen in geringen Mengen (<1 Gew.%) kann bei manchen Substraten die Haftung verbessern.

Die Füllstoffe können aus einer Vielzahl von Materialien ausgewählt werden, insbesondere sind hier zu nennen Kreiden, natürliche gemahlene oder gefällte Calciumcarbonate, Calcium-Magnesium-Carbonate, Silicate vom Typ des Aluminium-Magnesium-Calcium-Silicats, z. B. Wollastonit, Chlorit, Schwerspat sowie Ruß, in besonderen Fällen sind auch blättchenförmige Füllstoffe, wie z.B. Vermiculit, Glimmer, Talk oder ähnliche Schichtsilikate geeignet. In vielen Fällen werden Mischungen von verschiedenen Füllstoffen eingesetzt, beispielsweise können natürliche, gemahlene Kreiden in oberflächenbeschichter Form oder auch unbeschichtete Kreiden sowie gefällte, oberflächen beschichtete Kreiden eingesetzt werden.

Prinzipiell können die En-Polymerhaltige Komponente und die Thiol-haltige Komponente so formuliert werden, daß der Anwender eine Reihe von verschiedenen Mischungsverhältnissen der beiden Komponenten miteinander zu mischen hat, dies wird gesteuert durch die Funktionalität und den Anteil der jeweiligen reaktiven Verbindung in den beiden zu mischenden Komponenten. Dieses wird während des Herstellungsverfahren eingestellt und kann beispielsweise zwischen 1:10 und 10:1 eingestellt werden. Besonders bevorzugte Einstellungsvarianten sind 1:1 und, insbesondere in der Isolierglasindustrie, 10:1, wobei die überwiegende Komponente dann auch als Stammkomponente (oder A-Komponente) bezeichnet wird und die untergeordneten Mengenanteil verwendete Komponente als Härterkomponente (B-Komponente) bezeichnet wird.

Für ein zweikomponentiges System, bei dem das Mischungsverhältnis der Komponente A zur Komponente B 100 zu 10 Gew.-% betragen soll, setzen sich die beiden Komponenten vorzugsweise wie folgt zusammen:

| Komponente A | | |
|---|---|---|
| Bestandteil | Gew.-Teile | vorzugsweise |
| Bindemittel | 5 - 50 | 15 - 30 |
| Weichmacher | 5 - 20 | 8 - 14 |
| natürlich gemahlenes Calciumcarbonat | 5 - 30 | 15 - 25 |
| natürlich gemahlenes Calciumcarbonat, gecoatet | 5 - 50 | 20 - 40 |
| gefälltes gecoatetes Calciumcarbonat | 5 - 25 | 10 - 15 |
| Haftvermittler | 0,2 - 2,0 | 0,4 - 08 |
| Beschleuniger | 0,01 - 1,0 | 0,02 - 0,5 |

| Komponente B | | |
|---|---|---|
| Bestandteil | Gew.-Teile | vorzugsweise |
| Vernetzer | 20 - 60 | 40 - 60 |
| Weichmacher natürlich gemahlenes Calciumcarbonat | 5 - 25 | 6 - 16 |
| | 5 - 30 | 10 - 20 |
| natürlich gemahlenes Calciumcarbonat, gecoatet | 5 - 40 | 15 - 30 |
| Russ | 2 - 20 | 5 - 15 |
| Verzögerer | 0,01- 1,0 | 0,02- 0,5 |
| | | |

Die erfindungsgemäßen Zusammensetzungen eigenen sich insbesondere zur Verwendung als Kleb-/Dichtstoffe in der Bauindustrie zur Abdichtung von Anschluss- oder Dehnungsfugen, zur Verklebung von Glasplatten bei der Herstellung von Isoliergläsern, zum Verbinden oder Abdichten von Maschinenteilen oder von Gehäusen in der Haushaltsgeräteindustrie, im Fahrzeugbau oder im Containerbau oder in der Elektroindustrie.

Die Stammkomponente und die Härterkomponente können jeweils nach herkömmlichen und an sich bekannten Mischverfahren für pastöse Zusammensetzungen hergestellt werden. Vorzugsweise werden sie in evakuierbaren Mischaggregaten hergestellt um Gaseinschlüsse zu eliminieren. Beispielhaft erwähnt seien die folgenden geeigneten Mischaggregate Planetenmischer, Planetendissolver, Kneter oder Innenmischer.

Nachfolgend soll die Erfindung an einigen exemplarischen Beispielen näher erläutert werden. Dabei sind die angegeben Mengen Anteile der Einzelbestandteile der Komponenten Gewichtsteile bzw. Gewichtsprozent, falls nicht anders angegeben.

### Beispiele

### Beispiel 1 bis 3

Die in den nachfolgenden Tabellen aufgeführten Stammkomponenten (A) und Härterkomponenten (B) wurden separat in einem Planetenmischer unter Vakuum bis zur Homogenität gemischt und anschließend abgefüllt.

| | A1 | A2 | A3 |
|---|---|---|---|
| Poly bd R45 | 22,00 | 22,00 | 22,00 |
| Weichmacher | 12,00 | 11,98 | 12,40 |
| Kreide 1 | 23,00 | 23,00 | 23,00 |
| Kreide 2 | 31,60 | 31,60 | 31,60 |
| Kreide 3 | 11,00 | 11,00 | 11,00 |
| Silan A 187 | 0,40 | 0,40 | - |
| DBTL | - | 0,02 | - |
| | | | |

| | B1 | B2 | B3 |
|---|---|---|---|
| GDMA | 43,60 | 43,60 | 43,60 |
| Weichmacher | 8,40 | 8,80 | 8,40 |
| Kreide 1 | 15,00 | 14,50 | 14,50 |
| Kreide 2 | 25,00 | 25,00 | 25,00 |
| Russ | 8,00 | 8,00 | 8,00 |
| Lowinox 22M46 | - | 0,10 | - |
| Cyanox 1212 | - | - | 0,50 |
| Poly bd R45: OH-terminiertes Polybutadien, Molgew. 2800 GDMA: Glykol- Dimercaptoacetat Weichmacher: Dipropylenglycoldibenzoat ( DPGDB ), Velsicol 988 Kreide 1 natürlich gemahlenes Calciumcarbonat, Microsoel Kreide 2 natürlich gemahlenes Calciumcarbonat, gecoatet, Omya BR Kreide 3 gefälltes gecoatetes Calciumcarbonat, Calofort S Russ: Pulverruß Lowinox 22M 46: 2,2-Methylen-bis-( 4-methyl-6-tert.-butylphenol ) Cyanox 1212 Laurylstearylthiodipropionat DBTL Dibutylzinndilaurat Silan A 187 3-Glycidoxypropyltrimethoxysilan | | | |

Zur Ermittlung der Härtungsgeschwindigkeit wurden die nachfolgend aufgeführten Stammkomponenten mit den Härterkomponenten im Gewichtsverhältnis 1:10 vermischt. Unmittelbar nachdem Mischvorgang wurden Prüfkörper hergestellt und der Reaktionsverlauf der Mischung über den Festigkeitsanstieg der Shore A Härte bestimmt.

| Shore A nach | A1/B1 | A2/B1 | A3/B1 | A2/B2 | A2/B3 |
|---|---|---|---|---|---|
| 1h | 0 | 33 | 0 | 0 | 0 |
| 2h | 0 | 35 | 0 | 0 | 0 |
| 3h | 0 | 35 | 0 | 9 | 8 |
| 4h | 0 | 44 | 0 | 15 | 11 |
| 5h | 0 | 50 | 0 | 20 | 14 |
| 24h | 9 | 55 | 12 | 34 | 32 |
| 72h | 10 | 63 | 16 | 44 | 50 |

### Beispiele 4 bis 7

| | 4 | 5 | 6 | 7 |
|---|---|---|---|---|
| Polybd R45 | 22,0 | 22,0 | 22,0 | 22,0 |
| Weichmacher | 12,0 | 12,0 | 12,0 | 12,0 |
| Kreide 1 | 23,0 | 23,0 | 23,0 | 23,0 |
| Kreide 2 | 32,0 | 32,0 | 32,0 | 32,0 |
| Kreide 3 | 11,0 | 11,0 | 11,0 | 11,0 |
| K-Kat 4205 | | 0,5 | | |
| Oktasoligen Blei 24%ig | | | 0,5 | |
| K-Kat 5218 | | | | 0,5 |
| | | | | |
| GDMA | 4,3 | 4,3 | 4,3 | 4,3 |
| | 104,3 | 104,8 | 104,8 | 104,8 |
| Shore A24h | 3 | Härtung beim | 23 | 30 |
| Shore A96h | 22 | Mischvorgang | 50 | 30 |
| K-Kat 2405 = Zirkoniumkomplex mit 2,4 Pentadion, Katalysator der Fa King Industries K-Kat 5218 = Aluminumchelat, King Industries Oktasoligen Blei 24%ig, Bleinaphthenat, Fa Borchers | | | | |

Wie die Kombination A1/B1 zeigt, reagiert Thiol-/En-System ohne Reaktionsbeschleuniger sehr langsam, erst nach 24 Stunden ist eine signifikante Shore A Härte messbar. Der Zusatz von Beschleunigern ist an der Kombination A2/B1 deutlich erkennbar, bereits nach einer Stunde ist eine Shore A Härte von 33 zu messen. Da derartige Reaktionsgeschwindigkeiten für viele Anwendungsfälle zu schnell sind, läßt sich das System durch Reaktionsverzögerer den Bedingungen anpassen, wie an den Kombinationen A2/B2 und A2/B3 erkennbar ist. Die Kombination A3/B1, die weder Beschleuniger noch Reaktionsverzögerer enthält und auch kein epoxyfunktionelles Silan enthält, weist einen vergleichbaren Härteranstieg auf wie die Kombination A1/B1. Hiermit ist gezeigt, daß die erzielte Shore A Härte nicht auf eine Reaktion des Epoxysilans mit den Mercaptogruppen Härter Komponente zurückzuführen ist.

### Beispiele 4 bis 7

In diesen Beispielen wurden weitere Beschleuniger auf ihre beschleunigende Wirkung geprüft.

Der Einfachheit halber bestand in diesen Fällen die Härterkomponente lediglich aus den Glykol-Dimercaptoacetat. Wie aus den Shore A Härtemessungen nach 24 Stunden bzw. 96 Stunden hervorgeht, sind auch diese Katalysatoren als Reaktionsbeschleuniger für das erfindungsgemäße Thiol-/En-System geeignet.

## Patentansprüche

1. Zwei- oder mehrkomponentige Zusammensetzung enthaltend
a) mindestens eine Komponente auf der Basis eines bei Raumtemperatur flüssigen Polymers mit mindestens 2 nicht konjugierten olefinischen Doppelbindungen pro Molekül und
b) mindestens eine Härterkomponente auf der Basis von organischen Verbindungen mit mindestens 2 Mercaptogruppen pro Molekül,
**dadurch gekennzeichnet, daß** mindestens eine der Komponenten metallorganische Verbindungen als Reaktionsbeschleuniger enthält.

2. Zwei- oder mehrkomponentige Zusammensetzung nach Anspruch 1, **dadurch gekennzeichnet, daß** mindestens eine Komponente einen Reaktionsverzögerer enthält.

3. Zwei- oder mehrkomponentige Zusammensetzung nach Anspruch 1 oder 2 **dadurch gekennzeichnet, daß** der Reaktionsbeschleuniger ausgewählt wird aus Alkoxylaten oder Carboxylaten von ein-, zwei-, drei- oder vierwertigen Metallen, Alkylmetallverbindungen oder organischen Chelatverbindungen von zwei-, drei- oder vierwertigen Metallen.

4. Zwei- oder mehrkomponentige Zusammensetzung nach Anspruch 2, **dadurch gekennzeichnet, daß** der Reaktionsverzögerer ausgewählt wird aus sterisch gehinderten Phenolen, Benzotriazolen, Chinolinen, Thioethern, Thioestern oder deren Mischungen.

5. Zwei- oder mehrkomponentige Zusammensetzung nach mindestens einem der vorhergehenden Ansprüche, **dadurch gekennzeichnet, daß** das bei Raumtemperatur flüssige Polymer mit nicht konjugierten Doppelbindungen ausgewählt wird aus Allyl-terminierten Polyethern oder Polyurethanen, Polybutadienen, insbesondere 1,4- und 1,2-Poly-butadienen, Polybutenen, Polisobutylenen, 1,4- und 3,4-Polyisopren, Styrol-Butadien-Copolymeren, Butadien-Acrylinitril-Copolymeren, Ethylen-Propylen-Dien-Kautschuken (EPDM) oder deren Mischungen mit einem Molekulargewicht unterhalb von 40000, vorzugsweise zwischen 900 und 10000.

6. Zwei- oder mehrkomponentige Zusammensetzung nach mindestens einem der vorhergehenden Ansprüche, **dadurch gekennzeichnet, daß** die Härterkomponente ausgewählt wird aus Estern von Thiolcarbonsäuren mit Polyolen, Alkandithiolen, Alkantritiolen, Mercapto-terminierten Polyurethanen, Mercapto-terminierten Polysulfiden oder deren Mischungen.

7. Zwei- oder mehrkomponentige Zusammensetzung nach mindestens einem der vorhergehenden Ansprüche, **dadurch gekennzeichnet, daß** mindestens eine Komponente weitere Hilfs- und Zusatzmittel ausgewählt aus Füllstoffen, Pigmenten oder Farbstoffen, Weichmachern, Rheologiehilfsmitteln, Trockenmitteln, Haftvermittlern oder deren Mischungen enthält.

8. Verwendung der Zusammensetzung nach mindestens einem der vorhergehenden Ansprüche als Kleb-/Dichtstoff für Anschluß- oder Dehnungsfugen im Baubereich, zur Herstellung von Isoliergläsern, zum Verbinden oder Abdichten von Maschinenteilen oder- Gehäusen, in der Haushaltegeräteindustrie im Fahrzeug- und Containerbau oder in der Elektroindustrie.
